# EUROPEAN PATENT SPECIFICATION

(11) **EP 2 746 034 B1**
(45) Date of publication and mention of the grant of the patent: **20.04.2016**
(21) Application number: 13199057.4
(22) Date of filing: 20.12.2013
(51) Int. Cl.: B29D 30/06, B29C 73/24, B65G 47/244

(54) **APPARATUS FOR APPLYING SEALANT TO INNER SIDE OF TIRE**
VORRICHTUNG ZUM AUFBRINGEN VON DICHTMITTEL AUF DIE INNENSEITE EINES REIFENS
APPAREIL POUR APPLIQUER UN PRODUIT D'ÉTANCHÉTÉ SUR LA FACE INTÉRIEURE DU PNEU

(30) Priority: 21.12.2012 KR 20120150954
(43) Date of publication of application: 25.06.2014
(73) Proprietor: Hankook Tire Co., Ltd., Gangnam-gu, Seoul 135-723 (KR)
(72) Inventor: Son, Hyo Seung, 306-779 DAEJEON (KR)
(74) Representative: Intès, Didier Gérard André

(56) References cited:
- EP-A1- 1 238 787
- JP-A- S62 280 105
- JP-A- 2000 177 832
- JP-A- 2005 246 890
- US-A- 4 281 621
- US-A1- 2008 264 549

## Description

### BACKGROUND

### 1. Field of the invention

The present invention relates to an apparatus for applying a sealant to an inner side of a tire, which can provide safety to the tire by automatically filling a punctured portion with the sealant when the tire is punctured by a nail during travel.

### 2. Description of the Related Art

In general, when a pneumatic tire is punctured by a sharp object such as a nail while running, air leaks from the tire, thereby causing an accident. For example, when a front tire is punctured, a steering wheel becomes stiff and a vehicle body inclines to one side, and when a rear tire is punctured, running noise is generated, although not to the same extent as when the front tire is punctured. In the high temperatures of summer, roads heat up and thus tire puncture may be promoted by friction heat.

Further, if the pneumatic tire is continuously used in a punctured state, tire balance is not maintained, thereby increasing a vehicle accident risk while providing a possibility of crushing wheels.

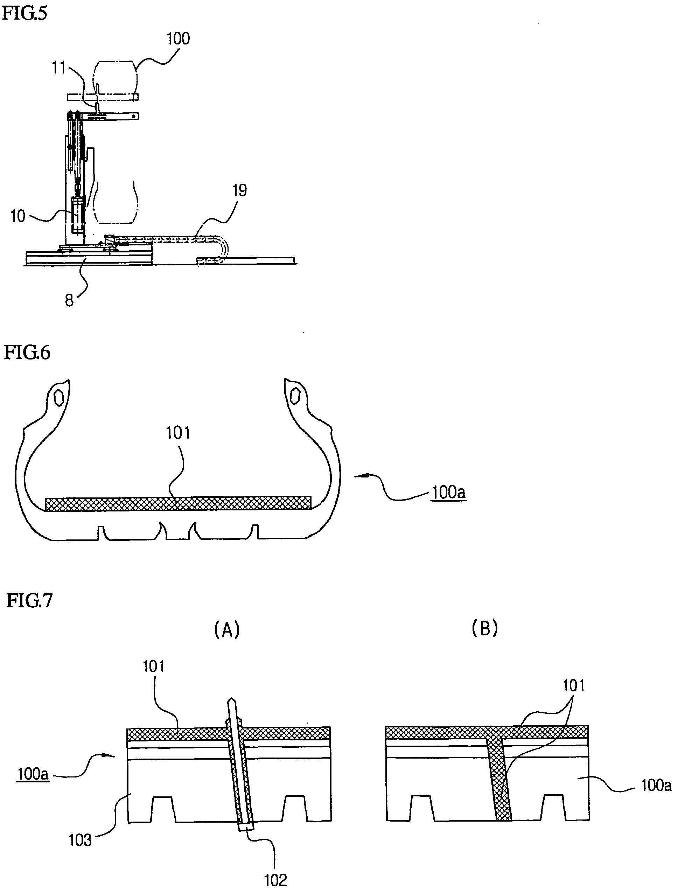

Accordingly, in the related art, when the pneumatic tire is punctured by a sharp object such as a nail, a punctured portion of the tire is filled with a sealant. In addition, a safety tire 100a includes a sealant 101 applied to an inner surface thereof as shown in Fig. 6. In such a safety tire, even when a sharp object such as a nail 102 pierces a tread 103 of the tire 100a and punctures the tire 100a during running as shown in Fig. 7 (A), the tire puncture hole caused by the nail 102 is filled with the sealant 101 applied to the inner side of the tire as shown in Fig. 7(B) when the nail 102 is removed, whereby the tire can be stably used.

Application of the sealant to the inner side of the tire may be manually performed using a sealant injection nozzle gun, or may be automatically performed. An example of a tire sealant applicator is disclosed in US 4 281 621A. US 4 281 621A discloses a movables sealant applicator for effecting airless spray application of sealant to a tire, together with a control system for controlling thereof and causing sealant to be purged a predetermined time after no sealant application is made. The sealant applicator includes a spray arm, a transverse pivot member, a frame member, a carriage assembly, a transverse roller support arm, a perpendicular nozzle arm, and a double acting reciprocative actuator. An example of a centering method is disclosed in JP2000 177832A. JP2000 177832A is to easily improve the work efficiency of centering and discloses that since a pneumatic tire T is pre-centered at a pre-centering station P that is a preceding station to a work station W, and centering is carried out by transferring the pre-centered pneumatic tire T to the work station W, the centering and the work at the work station W can simultaneously be progressed, and thereby, the work efficiency can easily be improved. Manual application provides low work efficiency and does not secure uniform quality, whereas automatic application requires an apparatus of a complicated structure, thereby significantly increasing manufacturing costs.

### BRIEF SUMMARY

The present invention has been made to solve such problems in the related art, and an aspect of the present invention is to provide an apparatus for applying a sealant to an inner side of a tire, which has a simple structure and can provide a safety tire by filling a punctured portion of the tire with the sealant applied to the inner side of the tire when the tire is punctured by a sharp object such as a nail, thereby lowering manufacturing costs.

In accordance with one aspect of the present invention, an apparatus for applying a sealant to an inner side of a tire to prepare a safety tire is provided. The apparatus includes: a feeding conveyor feeding a tire to the apparatus; a primary centering unit for primarily centering the tire fed by the feeding conveyor; a secondary centering unit for setting an accurate position of the tire having passed through the primary centering unit; a turning unit for receiving the centered horizontal tire from the secondary centering unit and rotating the tire by 90 degrees; a sealant application robot provided with a sealant application nozzle entering the tire rotated by 90 degrees in the turning unit; a rotating unit for rotating the tire with the sealant application nozzle placed inside the tire; a forward/rearward drive unit for moving the tire toward the secondary centering unit after a sealant discharged through the sealant application nozzle of the sealant application robot is completely applied to an inner side of the tire rotated by the rotating unit; and a discharge conveyor for discharging the tire to which the sealant has been completely applied.

According to the present invention, the apparatus for applying a sealant to an inner side of a tire can provide a safety tire through automatic application of the sealant to the inner side of the tire using simple facilities, and thus can prevent an accident by automatically filling a punctured portion of the tire with the sealant applied to the inner side thereof when the safety tire is punctured by a sharp object such as a nail.

### BRIEF DESCRIPTION OF THE DRAWINGS

The above and other aspects, features and advantages of the present disclosure will become apparent from the detailed description of exemplary embodiments given in conjunction with the accompanying drawings, in which:
Fig. 1 is a plan view of an apparatus for applying a sealant to an inner side of a tire according to one embodiment of the present invention;
Fig. 2 is a side view of the apparatus shown in Fig. 1;
Fig. 3 is a detailed side view of a turning unit and a forward/rearward drive unit;
Fig. 4 is a view of a sealant application robot acting on a tire;
Fig. 5 is an enlarged view of the forward/rearward drive unit;
Fig. 6 is a partially sectional view of a general tire including a sealant applied to an inner side thereof; and
Fig. 7 is a partially enlarged sectional view of a typical safety tire in which a punctured portion is filled with a sealant when the tire is punctured by a sharp nail.

### DESCRIPTION OF THE EMBODIMENTS

Hereinafter, embodiments of the present invention will be described in detail with reference to the accompanying drawings.

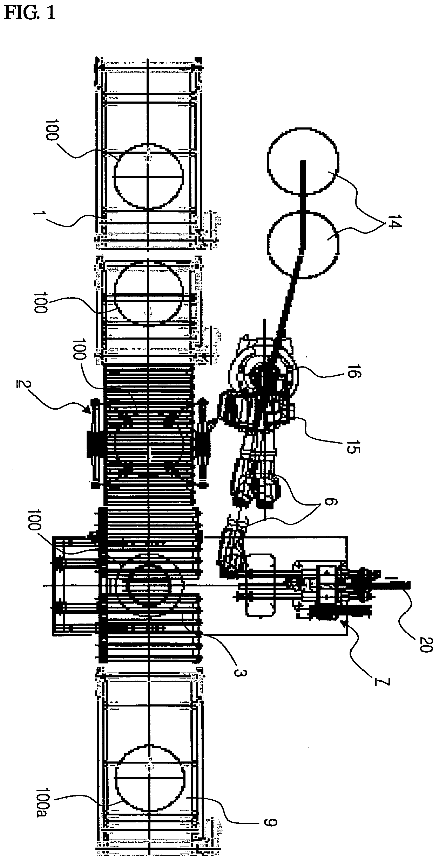

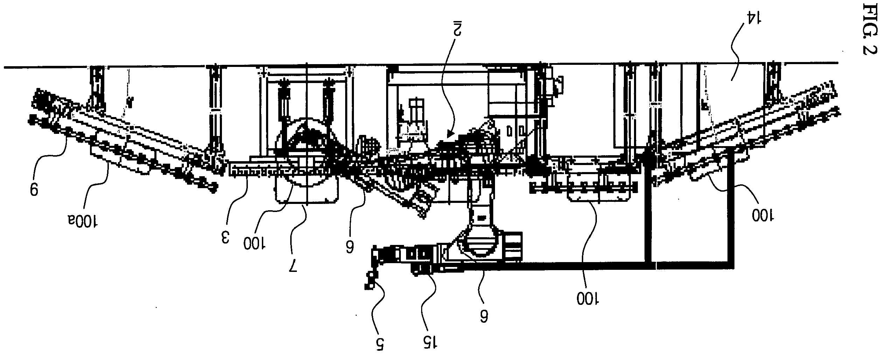

Figs. 1 and 2 are a plan view and a side view of an apparatus according to one embodiment of the present invention, respectively, which applies a sealant to an inside of a tire to prepare a tire as shown in Fig. 6.

The apparatus according to one embodiment of the invention, which applies a sealant 101 to an inner side of a tire 100 to prepare a safety tire, includes a feeding conveyor 1 for feeding the tire 100 thereto, a primary centering unit 2 for primarily centering the tire 100 fed by the feeding conveyor 1, a secondary centering unit 3 for setting an accurate position of the tire 100 having passed through the primary centering unit 2, a turning unit 4 for receiving the centered horizontal tire 100 from the secondary centering unit 3 and rotating the tire 100 by 90 degrees, a sealant application robot 6 provided with a sealant application nozzle 5 entering the tire 100 rotated by 90 degrees in the turning unit 4, a rotating unit 7 for rotating the tire 100 with the sealant application nozzle placed inside the tire 100, a forward/rearward drive unit 8 for the tire 100a toward the secondary centering unit 3 after the sealant 101 discharged from the sealant application nozzle 5 of the sealant application robot 6 is completely applied to an inner side of the tire rotated by the rotating unit 7, and a discharge conveyor 9 for discharging the tire 100a to which the sealant 101 has been completely applied.

Here, although the feeding conveyor 1 is an upwardly inclined conveyor in this embodiment, the feeding conveyor 1 may be a horizontal conveyor as needed. The primary and secondary centering units 2, 3 are devices typically used for position alignment of the tire 100.

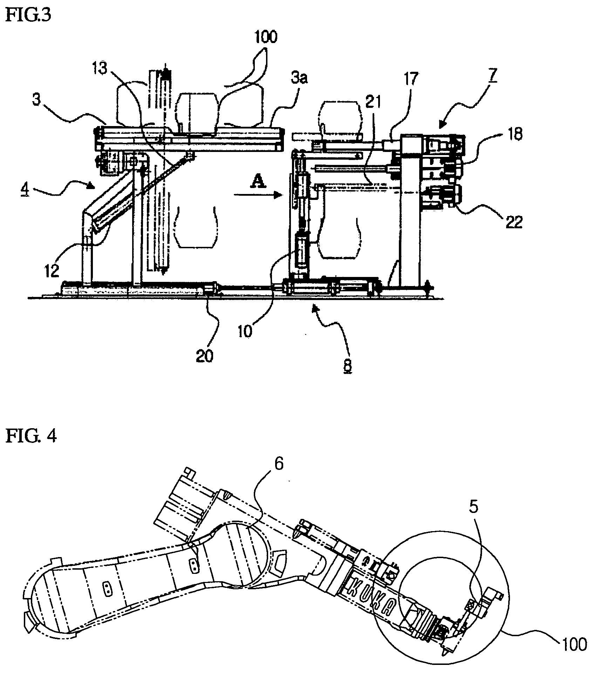

The turning unit 4 receives the tire 100 from the secondary centering unit 3 and turns the tire 100 by 90 degrees. As shown in Fig. 3, the turning unit 4 includes a securing bracket 11, which is connected to a lifting cylinder 10 and secures the transferred tire 100 placed on rollers 3a of the secondary centering unit 3, and a vertical-to-horizontal turning rod 13, which is connected to a turning cylinder 12 and raises the tire 100 secured by the securing bracket 11 to stand upright at an angle of 90 degrees.

As shown in Figs. 1 and 4, the sealant application robot 6 includes a sealant feeder 14, a supply pump 15 and the sealant application nozzle 5, and is controlled by a drive unit 16 such that the sealant application robot 6 may be moved forward and rearward and the sealant application nozzle 6 may have six degrees of motion freedom.

The rotating unit 7 includes a rotatable roller 17 inserted into a center hollow portion of the tire 100 and a rotary motor 18 for driving the rotatable roller 1. In addition, as shown in Fig. 5, the forward/rearward drive unit 8 includes a cable tray 19 for transferring the tire 100 in a horizontal direction.

The tire 100a to which the sealant 101 has been completely applied as shown in Fig. 6 is transferred to a test process, which is a post process for quality testing, from the secondary centering unit 3 through the downwardly inclined discharge conveyor 9.

Operation of the apparatus for applying a sealant to an inner side of a tire according to the present invention will be described.

A tire 100 selected for application of a sealant 101 to the inner side thereof is automatically transferred to the primary centering unit 2 by the feeding conveyor 1 and is subjected to primary centering in the primary centering unit 2.

Thereafter, the tire 100 is transferred to the secondary centering unit 3 to set a more accurate position of the tire 100. The tire 100 having been centered in the secondary centering unit 3 is lifted by the securing bracket 11 operated by the lifting cylinder 10 in the turning unit 4, as shown in Fig. 5, and is turned 90 degrees from a horizontal state to a vertical state to stand upright by the vertical-to-horizontal turning rod 13 of the turning unit 4, as shown in Fig. 3.

Next, a horizontal movement cylinder 20 of the forward/rearward drive unit 8 moves the tire 100 in a direction of Arrow A to transfer the tire 100 to the rotating unit 7. When the tire 100 is completely moved to the rotating unit 7, the securing bracket 11 positions the tire 100 on the rotating unit 7 while descending, and a tire bead securing roller 21 of the rotating unit 7 holds a bead section of the tire 100 while expanding by a drive motor 22. The tire 100 secured as described above is rotated by the rotatable roller 17 operated by the rotary motor 18.

Before the tire 100 is rotated by the rotating unit 7, as shown in Fig. 1, the sealant application robot 6 moves forward to access the tire 100 to which the sealant 101 will be applied, and as shown in Fig. 4, the sealant application nozzle 5 of the sealant application robot 6 moves toward the inside of the tire 100 and is placed at an application position of the sealant 101. A predetermined amount of the sealant 101 is fed at a predetermined pressure from the sealant feeder 14 to the sealant application nozzle 5 through the supply pump 15, and is then discharged through the sealant application nozzle 5.

When the sealant application nozzle 5 is placed at the application position of the sealant 101 as described above, the tire in a standby state is rotated by the rotating unit 7. Then, the sealant 101 is discharged from the sealant application nozzle 5 and as shown in Fig. 6, is applied and attached to an inner surface of the tire 100a in a predetermined width.

Thereafter, the tire 100a to which the sealant has been completely applied is moved by the forward/rearward drive unit 8 in a direction opposite the direction of Arrow A shown in Fig. 3 to be transferred to the secondary centering unit 3, and then transferred from the secondary centering unit 3 to a test process, which is a post process, by the discharge conveyor 9.

As described above, in preparation of a safety tire which allows a puncture portion to be automatically filled with a sealant previously applied to an inner side of the tire when the tire is punctured by a sharp object such as a nail during travel, the apparatus according to the present invention allows the sealant to be automatically applied to the inner side of the tire, thereby improving productivity and providing a simple facility structure.

Although some embodiments have been described with reference to the accompanying drawings, it should be understood that the present invention is not limited to these embodiments and can be made in various different ways, and that various modifications, variations, and alterations can be made by those skilled in the art without departing from the scope of the present invention. Therefore, the scope of the present invention should be determined by the claims and equivalents thereof.

## Claims

1. An apparatus for applying a sealant to an inner side of a tire to prepare a safety tire, **characterized in that** it comprises:
a feeding conveyor (1) feeding a tire (100) to the apparatus;
a primary centering unit (2) for primarily centering the tire (100) fed by the feeding conveyor (1);
a secondary centering unit (3) for setting ain accurate horizontal position of the tire (100) having passed through the primary centering unit (2);
a turning unit (4) for receiving the centered horizontal tire (100) from the secondary centering unit (3) and rotating the tire (100) by 90 degrees;
a sealant application robot (6) provided with a sealant application nozzle (5) entering the tire (100) rotated by 90 degrees in the turning unit (4);
a rotating unit (7) for rotating the tire (100) with the sealant application nozzle (5) placed inside the tire (100);
a forward/rearward drive unit (8) for moving the tire (100) toward the secondary centering unit (3) after a sealant (101) discharged through the sealant application nozzle (5) of the sealant application robot (6) is completely applied to an inner side of the tire (100) rotated by the rotating unit (7); and
a discharge conveyor (9) for discharging the tire (100) to which the sealant (101) has been completely applied.

2. The apparatus according to claim 1, wherein the turning unit (4) comprises:
a securing bracket (11) connected to a lifting cylinder (10) and securing the transferred tire (100) placed on a roller (3a) of the secondary centering unit (3); and
a vertical-to-horizontal turning rod (13) connected to a turning cylinder (12) and raising the tire (100) secured by the securing bracket (11) to stand upright at an angle of 90 degrees.

3. The apparatus according to claim 1, wherein the sealant application robot (6) comprises a sealant feeder (14), a supply pump (15) and the sealant application nozzle (5), and is controlled by a drive unit (16) such that the sealant application robot (6) is moved forward and rearward and the sealant application nozzle (5) has six degrees of motion freedom.

4. The apparatus according to claim 1, wherein the rotating unit (7) comprises:
a rotatable roller (17) inserted into a center hollow portion of the tire (100); and
a rotary motor (18) for driving the rotatable roller (17).

5. The apparatus according to claim 1, wherein the forward/rearward drive unit (8) comprises a cable tray (19) for transferring the tire (100) in a horizontal direction.

## Patentansprüche

1. Vorrichtung zum Aufbringen eines Dichtmittels auf eine Innenseite eines Reifens, um einen Sicherheitsreifen herzustellen, **dadurch gekennzeichnet, dass** sie umfasst:
einen Zuführförderer (1), welcher der Vorrichtung einen Reifen (100) zuführt,
eine primäre Zentriereinheit (2) zum anfänglichen Zentrieren des von dem Zuführförderer (1) zugeführten Reifens (100),
eine sekundäre Zentriereinheit (3) zum Einstellen einer genauen horizontalen Position des Reifens (100), der die primäre Zentriereinheit (2) durchlaufen hat,
eine Dreheinheit (4) zum Aufnehmen des zentrierten horizontalen Reifens (100) von der sekundären Zentriereinheit (3) und Drehen des Reifens (100) um 90 Grad,
einen Roboter zur Dichtmittelaufbringung (6), der mit einer Düse zur Dichtmittelaufbringung (5) versehen ist, die sich in den in der Dreheinheit (4) um 90 Grad gedrehten Reifen (100) hineinbewegt,
eine Dreheinheit (7) zum Drehen des Reifens (100), während die Düse zur Dichtmittelaufbringung (5) im Inneren des Reifens (100) angeordnet ist,
eine Vorwärts/Rückwärts-Antriebseinheit (8) zum Bewegen des Reifens (100) in Richtung der sekundären Zentriereinheit (3), nachdem ein durch die Düse zur Dichtmittelaufbringung (5) des Roboters zur Dichtmittelaufbringung (6) ausgetragenes Dichtmittel (101) vollständig auf eine Innenseite des von der Dreheinheit (7) gedrehten Reifens (100) aufgebracht worden ist, und
einen Auslaufförderer (9) zum Abfördern des Reifens (100), auf welchen das Dichtmittel (101) vollständig aufgebracht worden ist.

2. Vorrichtung nach Anspruch 1, wobei die Dreheinheit (4) umfasst:
eine Sicherungsklammer (11), die mit einem Hubzylinder (10) verbunden ist und den auf einer Rolle (3a) der sekundären Zentriereinheit (3) angeordneten übergebenen Reifen (100) sichert, und
eine Vertikal-Horizontal-Drehstange (13), die mit einem Drehzylinder (12) verbunden ist und den durch die Sicherungsklammer (11) gesicherten Reifen (100) aufrichtet, so dass er in einem Winkel von 90 Grad aufrecht steht.

3. Vorrichtung nach Anspruch 1, wobei der Roboter zur Dichtmittelaufbringung (6) eine Dichtmittelzuführeinrichtung (14), eine Förderpumpe (15) und die Düse zur Dichtmittelaufbringung (5) umfasst und von einer Antriebseinheit (16) gesteuert wird, derart, dass der Roboter zur Dichtmittelaufbringung (6) vorwärts und rückwärts bewegt wird, und wobei die Düse zur Dichtmittelaufbringung (5) sechs Freiheitsgrade der Bewegung aufweist.

4. Vorrichtung nach Anspruch 1, wobei die Dreheinheit (7) umfasst:
eine drehbare Rolle (17), die in einen mittleren hohlen Abschnitt des Reifens (100) eingesetzt wird, und
einen Drehmotor (18) zum Antreiben der drehbaren Rolle (17).

5. Vorrichtung nach Anspruch 1, wobei die Vorwärts/Rückwärts-Antriebseinheit (8) eine Kabelwanne (19) zum Transfer des Reifens (100) in einer horizontalen Richtung umfasst.

## Revendications

1. Appareil pour appliquer un produit d'étanchéité sur une face interne d'un pneu afin de préparer un pneu de sécurité, **caractérisé en ce qu'**il comprend :
un transporteur d'alimentation (1) amenant un pneu (100) à l'appareil ;
une unité de centrage principale (2) pour centrer principalement le pneu (100) amené par le transporteur d'alimentation (1) ;
une unité de centrage secondaire (3) pour régler une position horizontale précise du pneu (100) qui est passé par l'unité de centrage principale (2) ;
une unité de pivotement (4) pour recevoir le pneu horizontal centré (100) de l'unité de centrage secondaire (3) et faire tourner le pneu (100) à 90 degrés ;
un robot d'application de produit d'étanchéité (6) équipé avec une buse d'application de produit d'étanchéité (5) entrant dans le pneu (100) entraîné en rotation à 90 degrés par l'unité de pivotement (4) ;
une unité de rotation (7) pour faire tourner le pneu (100) avec la buse d'application de produit d'étanchéité (5) placée à l'intérieur du pneu (100) ;
une unité d'entraînement vers l'avant / vers l'arrière (8) pour déplacer le pneu (100) vers l'unité de centrage secondaire (3) après qu'un produit d'étanchéité (101) déchargé par la buse d'application de produit d'étanchéité (5) du robot d'application de produit d'étanchéité (6) a été complètement appliqué sur un côté interne du pneu (100) entraîné en rotation par l'unité de rotation (7) ; et
un transporteur de décharge (9) pour décharger le pneu (100) sur lequel le produit d'étanchéité (101) a été complètement appliqué.

2. Appareil selon la revendication 1, dans lequel l'unité de pivotement (4) comprend :
une console de fixation (11) raccordée à un cylindre de levage (10) et fixant le pneu transféré (100) placé sur un rouleau (3a) de l'unité de centrage secondaire (3) ; et
une tige de pivotement de la verticale à l'horizontale (13) raccordée à un cylindre de pivotement (12) et faisant monter le pneu (100) fixé sur la console de fixation (11) pour être droit à un angle de 90 degrés.

3. Appareil selon la revendication 1, dans lequel le robot d'application de produit d'étanchéité (6) comprend un dispositif d'alimentation de produit d'étanchéité (14), une pompe d'alimentation (15) et la buse d'alimentation de produit d'étanchéité (5) et est commandé par une unité d'entraînement (16) de sorte que le robot d'application de produit d'étanchéité (6) est déplacé vers l'avant et vers l'arrière et la buse d'application de produit d'étanchéité (5) a six degrés de liberté de mouvement.

4. Appareil selon la revendication 1, dans lequel l'unité de rotation (7) comprend :
un rouleau rotatif (17) inséré dans une partie creuse centrale du pneu (100) ; et
un moteur rotatif (18) pour entraîner le rouleau rotatif (17) .

5. Appareil selon la revendication 1, dans lequel l'unité d'entraînement vers l'avant / vers l'arrière (8) comprend un chemin de câble (19) pour transférer le pneu (100) dans une direction horizontale.
